# EUROPEAN PATENT APPLICATION

(11) **EP 4 588 860 A1**
(43) Date of publication of application: **23.07.2025**
(21) Application number: 24152797.7
(22) Date of filing: 19.01.2024
(51) Int. Cl.: B65G 1/137, A47B 9/18, A47B 31/00, A47B 87/02, B65G 57/00, B65G 57/03, B65G 57/16, B65G 1/10

(54) **MOVABLE LOGISTIC WORKSTATION**

(71) Applicant: MOVU, 9160 Lokeren (BE)
(72) Inventor: Goossens, Thomas, 3000 Leuven (BE)
(74) Representative: IP HILLS NV

(57) **Abstract**

A movable logistic workstation for an automated warehouse to adapt to the momentary workload requirements of the warehouse. The movable logistic workstations are configured to be flexibly and autonomously deployed by automated mobile transport devices that can identify the workstations, transport and deploy them where necessary.

## Description

### Field of the Invention

The present invention generally relates to the field of warehouse logistic operations and more specifically to logistic workstations. Logistic workstations are workstations that are manned by workers that may perform a variety of tasks such as picking, packing, sorting, shipping, returns processing or alike. The movable logistic workstations of the invention are designed to allow a flexible deployment in the warehouse to adapt to the workstation capacity requirements of the workload.

### Background of the Invention

Efficient manual logistic workstation operations such as picking, packing and sorting is crucial in the logistics and supply chain industry, as it directly impacts order fulfilment speed, accuracy, and customer satisfaction. Logistic workstations play a key role in achieving these goals by providing a dedicated space for the organized and systematic work on items from the warehouse inventory. Logistic workstations may be fitted with special items and accessories that are specialized to perform certain tasks.

For instance, the function of a picking workstation in logistics is to facilitate the efficient and accurate retrieval of items from the warehouse inventory to fulfil customer orders. The primary goal is to streamline the order picking process, reduce errors, and improve overall productivity in the warehouse or distribution centre. The picking workstation is where the order information is received and processed. This information includes details such as the items to be picked, the quantity required, and the destination. A picking workstation is therefore equipped with various peripherals to enhance efficiency, accuracy, and overall productivity. The choice of peripherals often depends on the specific needs of the operation, the type of goods being handled, and the level of automation.

Workers at the picking workstation are responsible for physically retrieving items from their storage locations in the warehouse. This involves locating the correct products based on the order information. In an automated warehouse, this process of retrieval is typically automated which implies that the workers at the picking station will have to wait for the items to be delivered at their workstation before they can start fulfilling the order. A fast retrieval and delivery of the different items to the picking workstation is therefore of crucial importance in order to improve productivity of the order picking process.

Logistic workstations typically comprise a table top that has unavoidably limited surface space. The table top of the picking station will be used by the workers to collect all items to fulfil one or more orders at the same time. Because of the limited surface space and the limited number of workers, the number of orders that can be simultaneously processed in the warehouse is limited. In times of high workload, it would be desirable to expand the amount of deployed workstations in a flexible way. Also would it be advantageous that the type of workstation specialized towards a specific task could be chosen to be deployed from storage in case of need. It would be advantageous that the different type of logistic workstations could be stored without occupying a lot of floor space, and that the workstations could be stored and retrieved a powered transport device such as a forklift, a powered robotic shuttle or alike.

### Summary of the Invention

It is an object of the invention to solve the problem of easily and flexibly deploying additional workstation capacity in a warehouse where and when needed. The invention intends to provide a workstation that can be stored on a limited floorspace, and deployed easily where needed. The invention also solves the problem of having a fixed warehouse configuration, comprising a fixed number of workstations that are fixedly installed and that are attached to the floor or to another fixed component of the warehouse infrastructure.

To this aim and according to a first aspect of the invention, there is provided a movable logistic workstation comprising a tabletop surface, a support structure supporting said tabletop surface, comprising vertical supports, a frame connecting said vertical supports, lifting points configured to lift, carry and position the workstation at a desired location by a mobile transport device, and at least one machine readable positioning marker configured for identification by and alignment with said mobile transport device.

In the context of this invention a logistic workstation, often referred to as a warehouse or fulfillment workstation, is a designated area within a logistics or distribution center where specific tasks related to the handling, processing, and management of goods and orders are performed. These workstations are integral components of a larger logistics system and are designed to optimize various tasks associated with the movement of products through a supply chain. The specific functions of a logistic workstation can vary depending on the type of facility and the processes involved in the supply chain.

The configuration and technology used in logistic workstations can vary widely depending on the scale of operations, the types of products being handled, and the level of automation implemented in the facility. The goal is to create an organized and efficient workflow that ensures accurate and timely processing of orders, ultimately contributing to a streamlined supply chain.

A logistic workstation is typically designed as a table with a table top that is supported by a frame. The frame is connected to a number of supports that serve as table legs. The table base provides stability and support to the tabletop. Depending on the design, the base can consist of a variety of elements, including legs, pedestals, or other structural components.

The lifting points of the invention are attachments that are typically fixed to the frame of the workstation, and that are essential to lift the workstation by means of a forklift, crane or other powered lifting device. An example of such an attachment is a set of lifting beams into which the forks of a forklift may fit to lift up the weight of the workstation. These lifting beams are typically welded to the frame of the workstation to ensure reliability and safety.

The movable logistic workstation is intended to be moved from a storage location to a location in the warehouse where the workstation is used by a mobile transport device. The mobile transport device may be one of a forklift, a crane or other powered lifting device such as for instance a powered robotic shuttle. The mobile transport device is preferably a robotic device that is configured to detect, analyze and interpret machine readable positioning markers.

The movable logistic workstation is provided with at least one machine readable positioning marker which is a visual or coded identifier designed to be detected and interpreted by machines, such as cameras or sensors, to determine the precise position or location of an object or device. These markers are commonly used in various applications, including robotics, computer vision, augmented reality, and automated systems where accurate positioning is crucial. The application of these markers allows to automate the process of identifying the workstations, picking them up, moving them around and positioning them at a desired location for use. The markers assist the robotic lifting devices to properly select the correct workstation, to correctly approach the movable logistic workstation, and align with its lifting points for lifting.

In a further embodiment, the movable logistic workstation of the invention further comprises a battery system for powering workstation peripherals and an electrical interface configured to charge or discharge said battery system with said mobile transport device.

In another embodiment is the movable logistic workstation configured with a stacking means for vertically stacking multiple workstations on top of each other. The stacking means may be for instance stacking brackets or an interlocking design of the workstations; the workstations may come with interlocking features, where one workstation has protrusions or slots that fit into corresponding recesses on another workstation. The stacking brackets help secure the workstations when stacked. These are usually fixed to the underside of the workstation and interlock with corresponding features on another workstation.

The stacking means allows the workstations to be safely stacked while preserving the scarce floor space when not in use. Stacking the workstations allows for flexible deployment of additional workstation surface when needed.

The movable logistic workstation may optionally be configured with supporting wheels that are fitted at a bottom part of the vertical supports. The wheels may be fitted to all vertical supports such that the workstation can be easily moved around and position by a single worker. Additionally may the supporting wheels be retractable such that the workstation is immobilized when the wheels are in retracted position. This offers the advantage that the workstation provides a solid and stable working surface to perform the logistic operations.

The tabletop surface of the movable logistic workstation may comprise storage systems, picking tools or a packaging area for performing picking operations by a worker. The tabletop surface of the movable logistic workstation may further comprise an inspection area and testing equipment for performing quality control operations by a worker.

The movable logistic workstation of the invention may further comprise docking points configured to fix the workstation to warehouse infrastructure. The support structure has to be understood as comprising the frame connecting the vertical supports. The docking points have to be understood as one side of an assembly that is the interface or connection mechanism that allows the workstation and any warehouse infrastructure to securely join together. These docking points are designed to align and interlock, facilitating a stable and functional connection between the components. The docking points are typically engineered to ensure precise positioning, proper alignment, and secure engagement, thereby enabling the seamless integration of the two parts in the assembly. This connection may involve various features such as tabs, slots, pins, latches, or other complementary elements that ensure a reliable and efficient coupling between the two components. The successful docking of these points is crucial for the overall functionality and structural integrity of the assembled system.

The docking points may be configured to engage with warehouse infrastructure, or for instance with an autonomous robotic device that is configured to charge the battery system. In the latter case will the connection of the autonomous robotic device with the docking points of the movable warehouse ensure of stable and secure connection of the electrical interface during the charging of the battery system.

Another embodiment of an automated warehouse that comprises multiple movable logistic workstations of the invention described above, may comprise a temporary storage location for storing unused movable logistic workstations, a mobile transport device configured to identify said movable logistic workstation by means of said machine readable positioning marker, and configured to lift, carry and position said movable logistic workstation by means of said lifting points, and a warehouse management system adapted to flexibly deploy additional workstation places when needed.

The automated warehouse of the invention is a warehouse which is at least partially automated, and wherein movable logistic workstations are either stored on a temporary storage location in the warehouse, or are deployed for use during logistic operations. The temporary storage location in the warehouse is an area where unused movable logistic workstations can be stacked onto each other and stored.

The movable logistic workstations are deployed at the command of warehouse management system that identifies the amount of workstations that are required for the scheduled logistic operations. By monitoring the workload, the warehouse management system can adjust the number and type of logistic workstation in the work area of the warehouse. An instruction can then be issued to one of the mobile transport devices which then can execute the order by collecting one of the required workstations and moving it to the work area of the warehouse.

Specific examples and preferred embodiments are set out in the dependent claims. Further advantages and embodiments of the present invention will become apparent from the following description and drawings.

### Brief Description of the Drawings

- Fig. 1: illustrates a movable logistic workstation of the invention;
- Fig. 2: illustrates a stack of three movable logistic workstations;
- Fig. 3: illustrates a top view of an automated warehouse of the invention before deployment of a number of movable logistic workstations; and
- Fig. 4: illustrates a top view of an automated warehouse of the invention after three additional movable logistic workstations have been deployed.

### Detailed Description of Embodiment(s)

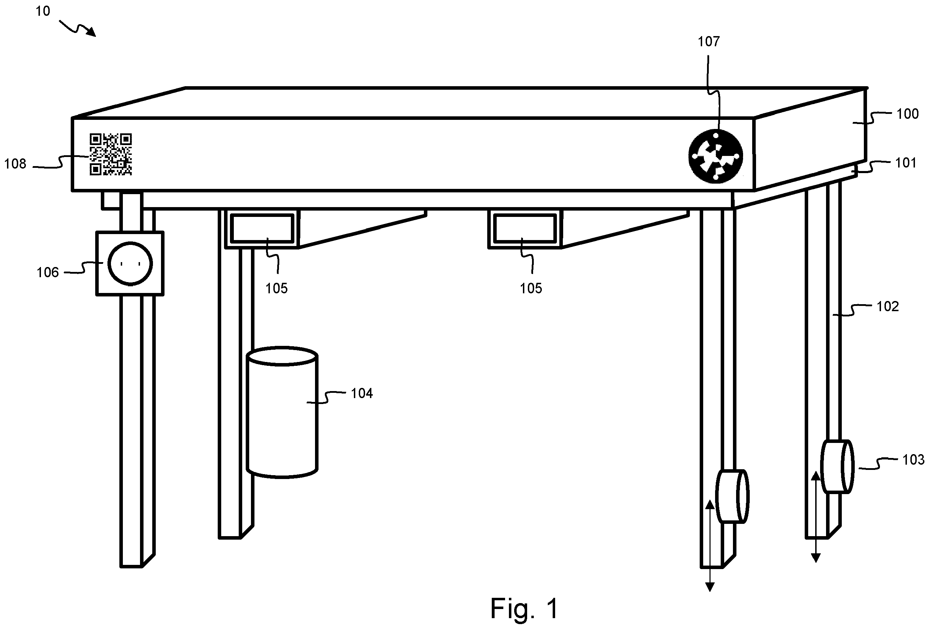

Fig. 1 depicts a movable logistic workstation 10 of the invention, wherein its different components are depicted. The tabletop surface 100 is the workspace for a worker 30 to perform the logistic operations that are performed in the working area of the warehouse. Since different types of logistic operations typically are performed at these workstations by workers, the actual design of these workstations and the fitted peripherals may vary accordingly.

In the drawing of Fig. 1 a generic movable logistic workstation is depicted without showing any specific peripherals attached to it. The table top surface 100 is the most important element of the workstation 10 as it provides the useable real estate for the logistic operations. The size of the tabletop surface is ideally as large as possible, but is at the same time restricted by the limited reach of the worker standing at the workstation.

The structural components of the movable logistic workstation 10 comprise the vertical supports 102 which are embodied in the drawing as four table legs that are attached to frame 101 to which the table legs are welded or fixed. The table frame 101 provides the structural strength and stability to the table and is the supportive structure beneath the tabletop and sometimes between the legs. The vertical supports 102 may also be embodied as a slab of material, for instance a wooden or metal panel, that replaces two of the vertical supports.

The vertical supports 102 shown in the drawing are fitted with retractable supporting wheels 103. The wheels are retractable in the direction of the arrows of the drawing. When the wheels are in a retracted position, the workstation will not be movable. The supporting wheels 103 allows a user to move the movable logistic workstation 10 without a lot of effort. The wheels may be fixed wheels or swivel wheels, the latter providing increased manoeuvrability.

An important feature of the invention are the lifting points 105 that are reinforced structures where the movable logistic workstation 10 is preferably picked up by one of the mobile transport devices in the warehouse. The lifting points 105 are attachments that are typically fixed to the frame of the workstation, and that are essential to lift the workstation by means of a forklift, crane or other powered lifting device. In Fig. 1, the lifting points are embodied as lifting beams into which the forks of a forklift may fit to lift up the weight of the workstation. These lifting beams or spreader bars are typically welded to the frame of the workstation to ensure reliability and safety. Alternative lifting points may be embodied as eye bolts, swivel hoist rings, lifting hooks, shackles, lifting magnets or alike.

Two types of machine-readable positioning markers are depicted in the embodiment represented in Fig. 1; a QR-code or quick response code 108 and a AR-code or augmented reality code 107.

Machine-readable positioning markers have specific characteristics that make them identifiable and interpretable by machines, such as cameras, sensors, or scanners. The marker typically consists of a visual pattern or code that can be visually recognized or interpreted by a machine vision system. This pattern may be a barcode, QR code, unique visual features, or a specialized design. The marker often has high contrast compared to its background to facilitate accurate detection. This ensures that the machine can distinguish the marker from the surrounding environment.

Machine-readable markers may have distinctive features, such as unique shapes, colors, or patterns, making them easily distinguishable from other visual elements in the environment. The size of the marker is important for accurate detection and interpretation. It needs to be of sufficient size and scale to be recognized by the sensors or cameras capturing the image. The marker may encode positional or identification information, either directly within the code or through its position in relation to other markers or reference points. This information helps to identify the workstation and its type, and also may determine the object's location or orientation. Different machine-readable markers may be applied to the front, the sides and the back of the workstations, such that its is immediately clear upon machine-detection which side of the workstation is within view.

The movable logistic workstation is intended to be moved from a storage location to a location in the warehouse where the workstation is used by a mobile transport device. The mobile transport device may be one of a forklift, a crane or other powered lifting device such as for instance a powered robotic shuttle. The mobile transport device is preferably a robotic device that is configured to detect, analyze and interpret machine readable positioning markers.

The movable logistic workstation further comprises a battery system 104 and an electrical interface 106 configured to charge or discharge the battery system 104 by means of a mobile transport device 20 that operates in the warehouse. The battery or battery system is configured for powering workstation peripherals, providing the powering needs for these peripherals. The battery system may comprise a battery and a power convertor converting the direct current of the battery into the powering needs of the peripherals.

Since the movable logistic workstation of the invention may be positioned at any location in the logistic warehouse, certain utilities such as electricity may not be readily available for the workstation to connect to on this exact location. In order to get access to electric power in this case, extension cords may be used, but these have the disadvantage of being damaged by people, carts and other rolling equipment stepping on or rolling over them. Also, extension cords pose a tripping hazard. Since some of the workstation peripherals require electric power to operate, in fixed workstation configurations an electric connection is always at the dedicated workstation locations.

In order to overcome the problem of having to use extension cords, the workstation of the invention comprises a battery system that can meet the power requirements of the workstation peripherals. Most of the peripherals have relatively low power requirements which can easily be supported by a relatively small battery system. Examples of such peripherals are: a handheld barcode scanner, a computer, a touchscreen display, an RFID reader, a mobile device with a charging station, a label printer, a weighing scale, or alike.

Another feature of the solution is an electrical interface 106 that is performing two functions. A first function is that it provides an electrical connection point for charging the battery system 104 by an external power source. The second function is the power supply to the peripherals. The power source to charge the battery system of the movable logistic workstation may be either one of a mains power or a mobile power source, such as for instance a robotic shuttle that can share some its electrical charge with another device.

The movable logistic workstation may be for instance charged in advance of a period of usage by charging the battery system by a connection to the mains power at the storage location for the movable logistic workstation. Alternatively may the battery system be charged at regular intervals by using mains power over an extension cord. In another use case, can the battery system be charged by a autonomous robotic device that is configured to share a portion of its battery charge with another device. In this case may the autonomous robotic device dock to the movable logistic workstation, connect to electrical interface and release some of its electrical charge to the battery system of the movable logistic workstation.

In the context of charging the battery system by an autonomous robotic device may the machine-readable markers play another role; the machine-readable markers may be used to identify and locate the electrical interface of the movable logistic workstation such that the autonomous robotic device may autonomously operate for charging the different movable logistic workstations.

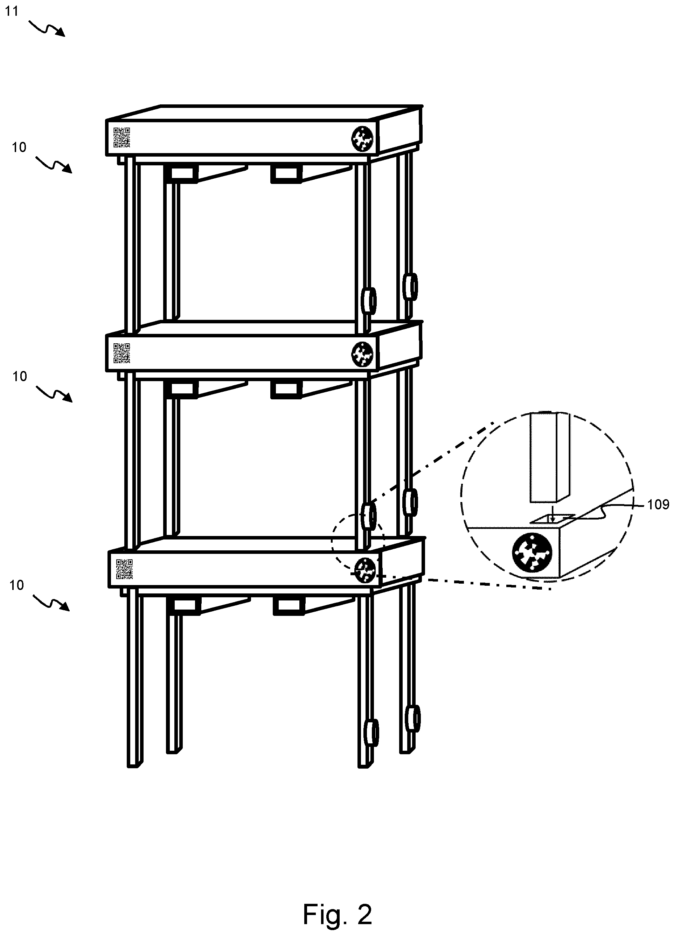

Fig. 2 illustrates the vertical stacking capability of the movable logistic workstations 100 of the invention. The movable logistic workstations as embodied in the drawing comprise a stacking means 109 that consists of a recess in the table top 100 that fits the shape of the vertical supports 102. In this way the movable logistic workstations can be stacked on top of each other on condition that the wheels 103 are retracted. The advantage of the presence of the stacking means is that a high number of movable logistic workstations may be stored on a limited floor space.

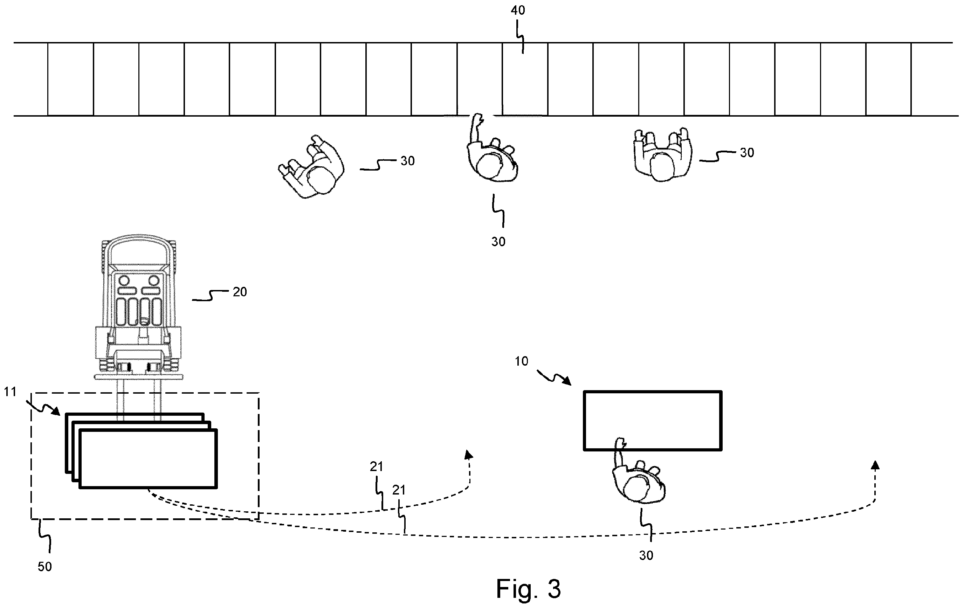

In Fig. 3 a top view of an exemplary embodiment of an automated warehouse of the invention is depicted and comprises a single movable logistic workstation 10 that is deployed for use by a worker 30. A stack 11 of stored multiple movable logistic workstations of the invention is depicted within the boundaries of a temporary storage location 50 for storing unused movable logistic workstations. A mobile transport device 20 configured to identify said movable logistic workstations 10 by means of the machine readable positioning markers is configured to lift, carry and position the movable logistic workstations by means of the lifting points. Three workers 30 are working at a conveyor belt 40 that is part of the warehouse. In the invention, the warehouse management system will determine when, where and how many additional workstation places have to be deployed 21. In the drawing, two additional movable workstations have to be deployed in the direction of the arrows 21.

The automated warehouse of the invention is a warehouse which is at least partially automated, and wherein movable logistic workstations are either stored on a temporary storage location 50 in the warehouse, or are deployed for use during logistic operations. The temporary storage location 50 in the warehouse is an area where unused movable logistic workstations can be stacked onto each other and stored.

The movable logistic workstations 10 are deployed at the command of warehouse management system that identifies the amount of workstations that are required for the scheduled logistic operations. By monitoring the workload, the warehouse management system can adjust the number and type of logistic workstation in the work area of the warehouse. An instruction can then be issued to one of the mobile transport devices deploy an additional workstation. The mobile transport device can then execute the instruction by collecting one of the required workstations and moving it to the intended area in the work area of the warehouse.

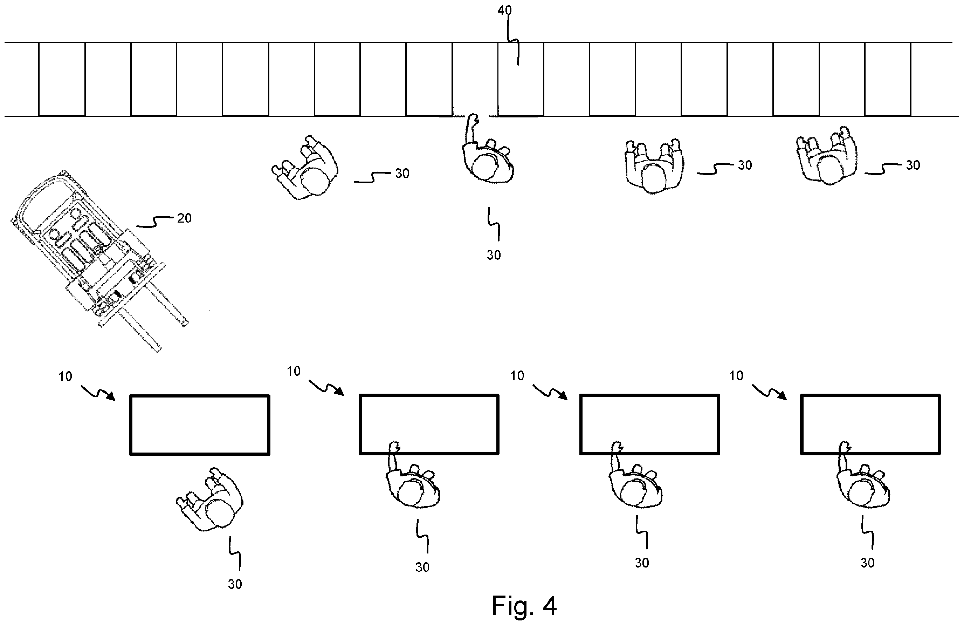

Fig. 4 depicts a top view of the situation after the deployment of the movable logistic workstations 10 to their deployment positions 21. The result is that now four movable logistic workstations 10 are available for performing the logistic operations.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A movable logistic workstation (10), comprising:
a tabletop surface (100)
a support structure supporting said tabletop surface, comprising
vertical supports (102),
a frame (101) connecting said vertical supports (102),
lifting points (105) configured to lift, carry and position the workstation (10) at a desired location by a mobile transport device (20), and
at least one machine readable positioning marker (107, 108) configured for identification by and alignment with said mobile transport device (20).

2. The movable logistic workstation (10) according to claim 1, further comprising a battery system (104) for powering workstation peripherals, and an electrical interface (106) configured to charge or discharge said battery system (104) with said mobile transport device (20).

3. The movable logistic workstation (10) according to claim 1, further comprising stacking means (109) for vertically stacking multiple workstations on top of each other.

4. The movable logistic workstation (10) according to claim 1, wherein a bottom part of said vertical supports (102) has supporting wheels (103) which may be retractable.

5. The movable logistic workstation (10) according to claim 1, wherein said tabletop surface (100) comprises storage systems, picking tools or a packaging area for performing picking operations by a worker (30).

6. The movable logistic workstation according to claim 1, further comprising docking points configured to fix said support structure to warehouse infrastructure.

7. The movable logistic workstation according to claim 1, wherein said tabletop surface (100) comprises an inspection area and testing equipment for performing quality control operations by a worker (30).

8. A warehouse comprising multiple movable logistic workstations (10) of any of the preceding claims, and comprising
a temporary storage location (50) for storing unused movable logistic workstations (11),
a mobile transport device (20) configured to identify said movable logistic workstation (10) by means of said machine readable positioning marker (107, 108), and configured to lift, carry and position (21) said movable logistic workstation (10) by means of said lifting points (105),
a warehouse management system adapted to flexibly deploy additional workstation places when needed.

9. A method for deploying multiple movable logistic workstations (10) in a warehouse, the method comprising the steps of:
determining by a warehouse management system a number of movable logistic workstations (10) that are required to meet the picking, sorting an restocking workload, and the target locations for said number of movable logistic workstations,
instructing said mobile transport device (20) to lift, carry and position (21) said number of movable logistic workstations to said target locations.
